# EUROPÄISCHE PATENTANMELDUNG

(11) **EP 1 755 026 A2**
(43) Veröffentlichungstag der Anmeldung: **21.02.2007**
(21) Anmeldenummer: 06090128.7
(22) Anmeldetag: 04.08.2006
(51) Int. Cl.: G06F 3/042

(54) **Verfahren und Anordnung zur Erkennung einer Bedienposition**

(30) Priorität: 09.08.2005 DE 102005038389
(71) Anmelder: Hannaleck, Rüdiger, 16845 Wildberg (DE); Cerbe, Michael, 16818 Radensleben (DE)
(72) Erfinder: Hannaleck, Rüdiger, 16845 Wildberg (DE); Cerbe, Michael, 16818 Radensleben (DE)
(74) Vertreter: Kietzmann, Manfred

(57) **Zusammenfassung**

Die Erfindung betrifft ein Verfahren zur Erkennung einer Bedienposition an einer aus Lichtstrahlen gebildeten Bedienebene (1) mit um die Bedienebene (1) rahmenförmig umlaufend und untereinander beabstandet angeordneten Leuchtelementen (3). Die grundsätzlichen Komponenten der Anordnung zur Erkennung der Bedienposition (2) an der aus Lichtstrahlen (11) gebildeten Bedienebene (1) bestehen aus den Leuchtelementen (3) mit großem Abstrahlwinkel α, so dass sie ein Streufeld bilden und deren Strahlung durch beabstandet angeordnete Detektoren (4), hier an jeder Ecke der rechteckigen Bedienebene, erfassbar und als Signal einer Auswerteeinheit (5) zuleitbar sind. Das bei der Weiterschaltung nacheinander erfolgende Aktivieren und Deaktivieren des jeweiligen Leuchtelementes (3) erfolgt durch die Steuereinheit (6), die gleichzeitig mit der Auswerteeinheit (5) gekoppelt ist. Bestandteil der Auswerteeinheit (5) oder eine gesonderte Baugruppe ist der Positionsermittler (9), der über ein Interface (8) mit den jeweils die Eingabe realisierenden Baugruppen verbunden ist

## Beschreibung

Die Erfindung betrifft eine gemeinhin als Touchscreen bezeichnete Eingabeneinheit für Informationen an Bedienflächen oder Bildschirmen, bei der die Bedienposition mittels Licht vorzugsweise mittels einer Infrarottechnologie detektiert und berechnet wird.

Die Infrarot-(IR) Technologie des nach dem Erfinder benannten CarollTouch-Touchscreens basiert auf der Unterbrechung eines vor dem Bildschirm erzeugten IR-Lichtrasters. Der Touch- oder Opto-Matrix-Rahmen enthält eine Reihe von IR-Dioden (LED's) und Fototransistoren, die jeweils auf zwei gegenüberliegenden Seiten angebracht sind, um ein Raster aus für das menschliche Auge nicht sichtbarem IR-Licht zu erzeugen. Die Rahmenbaugruppe besteht aus Leiterplatten, auf denen die Opto-Elektronik installiert und hinter einem IR-durchlässigen Einbaurahmen verborgen wird. Dieser schützt die Opto-Elektronik vor den Einflüssen der Betriebsumgebung und lässt gleichzeitig die IR-Strahlen passieren.
Der IR-Kontroller aktiviert die LED's in einer gleichmäßigen Frequenz, um ein Raster aus gebündelten IR-Lichtstrahlen zu erzeugen. Wenn ein Objekt wie beispielsweise ein Finger das Raster durchdringt, werden die Strahlen unterbrochen. Ein oder mehrere Fototransistoren erkennen das Fehlen von Licht und übertragen ein Signal, das die x-und y-Koordinaten identifiziert.(www.elotouch.de 13.06.2005)

Notwendig ist hier die Strahlenbündelung, da jeweils gegenüberliegende IR-Dioden und Fototransistoren zusammenwirken.

In der DE 39 02 464 A1 ist ein Touchscreen beschrieben, bei dem abweichend von einem mit einem rechtwinkligen Koordinatensystem arbeitenden Touchscreen mit einer schräg verlaufenden Strahlung gearbeitet wird. Hierbei kommen Paare von Einzellichtschranken zum Einsatz. Dem Vorteil des Ausgleichens der Krümmung von gewölbten Bildschirmen steht ein erhöhter technischer Aufwand gegenüber.

Aus der EP 0 650 138 B1 mit weiteren Nachweisen zum Stand der Technik ist ein Berührungsbildschirm bekannt, der bei einem Bildschirm am rechten und linken Rand zwei Lichtstrecken generiert. Das Licht wird durch ein Spiegelpaar reflektiert, sodass es parallel zur Oberfläche der CRT strahlt. Vier Lichtdetektoren sind an den vier Ecken der CRT angeordnet, so dass beim Einbringen z.B. eines Fingers in den aktiven Bereich wenigstens ein Teil des Lichtmusters gegen den Detektor blockiert wird. Diese und weitere Angaben werden zur Positionsbestimmung genutzt. Ein zentrales Element bildet bei dieser Lösung die Erzeugung der Frequenz des Lichtmusters.

Nachteilig ist hier insbesondere, dass jeder Detektor nur die Hälfte des Eingabebereiches überdeckt. Das führt zur Ungleichmäßigkeit in der Positionserkennung.

Aufgabe der Erfindung ist es, eine beliebige Bedien-/Eingabefläche auf Betätigung zu überwachen. Mit geringem Hardware-Aufwand und unter Verwendung von preiswerten Leuchtelementen sowie einer reduzierten Zahl an Detektoren soll die Erkennung einer Betätigung möglich sein. Weiterhin ist es Aufgabe der Erfindung den Touch- oder Opto-Matrix-Rahmen inklusive der Berührungsplatte flach, d.h., mit geringer Dicke auszubilden. Der gegenwärtig genutzte CarrollTouch benötigt noch Überstände über der Berührungsplatte für die Touch- oder Opto-Matrix von 6 mm und mehr.

Gelöst wird diese Aufgabe mit den Merkmalen der Ansprüche 1 und 9. Vorteilhafte Ausgestaltungen sind Gegenstand der Unteransprüche. Die Ansprüche 16 und 17 beschreiben Verwendungen.

Das erfindungsgemäße Verfahren zur Erkennung einer Bedienposition an einer aus Lichtstrahlen gebildeten Bedienebene mit um die Bedienebene rahmenförmig umlaufend untereinander beabstandet angeordneten Leuchtelementen, deren Strahlung durch Detektoren, deren Anzahl deutlich unter der Zahl der Leuchtelemente liegt, erfasst und einer Auswertung zugeleitet wird, sieht vor, dass die Leuchtelemente von einer Steuereinheit zyklisch umlaufend weitergeschaltet und dabei jeweils aktiviert und deaktiviert werden, das abgestrahlte Licht der Leuchtelemente jeweils mit einem großen Abstrahlwinkel α, ein Streufeld bildend, ausgesendet wird, so dass die Bedienebene nach einem umgelaufenen Weiterschaltzyklus vollständig von leuchtenden Strahlen abgedeckt war, jeder Detektor den oder die ihm gegenüberliegenden Randbereiche auf Abstrahlung von den nacheinander aktivierten Leuchtelementen überwacht und die Nichterfassung der Abstrahlung als Fehlmeldung einer Recheneinheit zugeführt wird, wobei mindestens die Fehlmeldung von zwei Detektoren zur Positionsbestimmung genutzt wird.
Die Bedienebene wird somit durch einen umlaufendes Lichtsignal, vorzugsweise punktförmig beschrieben, der durch weiterschalten von Leuchtelement zu Leuchtelement bewegt wird. Innerhalb einer Zeiteinheit wird also eine bestimmte Anzahl Umlaufzyklen realisiert. Dabei hat es sich bewährt, innerhalb einer Zeit von 1 Sekunde mehrere Umlaufzyklen zu realisieren, vorzugsweise 4 Umlaufzyklen.

Im Gegensatz zum Stand der Technik, der gebündeltes Licht verwendet, werden hier Leuchtelemente mit einem großen Abstrahlwinkel α eingesetzt. Der Abstrahlwinkel α ist mindestens so groß gewählt, dass das abgestrahlte Licht direkt durch zwei beabstandet angeordnete Detektoren erfassbar ist, bevorzugt größer 90°, vorzugsweise bis 180° oder 360°. Das bedeutet, dass auf Spezialleuchten mit Bündeleffekt verzichtet werden kann. Die hat wiederum Auswirkung auf die Kosten und die Baugröße, die sich verringert, wenn man sich vorstellt, dass die Leuchten rahmenförmig um eine Berührungsfläche angeordnet sind und diese nach vorn überragen zur Bildung der Bedienebene.

Weiterhin sieht eine vorteilhafte Ausgestaltung vor, dass zwischen dem Deaktivieren des einen Leuchtelementes und dem Aktivieren des folgenden Leuchtelementes eine Pause verbleibt, in der durch die Detektoren die Umweltlichtverhältnisse des zur Aktivierung anstehenden Leuchtelementes erfasst und einer Auswertung zugeleitet werden. Die Auswerteeinheit kann so durch Differenzbildung Pause-LEDan feststellen, ob das Detektorsignal bei LEDan real oder auf Umwelteinflüsse oder Manipulation zurückzuführen ist. Dies ist ein weiterer wesentlicher Vorteil des vorgeschlagenen Verfahrens zur Erkennung einer Bedienposition.

Neben den üblichen Verwendungen als Eingabeeinrichtung auf Bildschirmen z.b. bei Bankautomaten oder Auskunfts- und Verkaufsautomaten, hat sich das Verfahren und die Anordnung zur Erkennung der Bedienposition ohne Berührungsfläche bewährt zur Sicherung des Zugriffs auf Schalter für Maschinen oder andere einer Kontrolle unterliegenden Betätigungsmitteln. Mit Berührungsfläche sind sie zur Steuerung medizinischer und anderer Geräte, an die höchste Anforderungen in Bezug auf Sauberkeit und Sterilität gestellt werden, bestens geeignet.

Die Erfindung soll anhand der Zeichnungen erläutert werden. Es zeigen:
- Fig. 1: die Komponenten der Anordnung zur Erkennung der Bedienposition,
- Fig. 2 bis 4: die Lichtausstrahlung und Detektierung,
- Fig. 5 und 6: die Bestimmung der Bedienposition und
- Fig. 7: die Bedienebene mit Berührungsfläche im Schnitt.

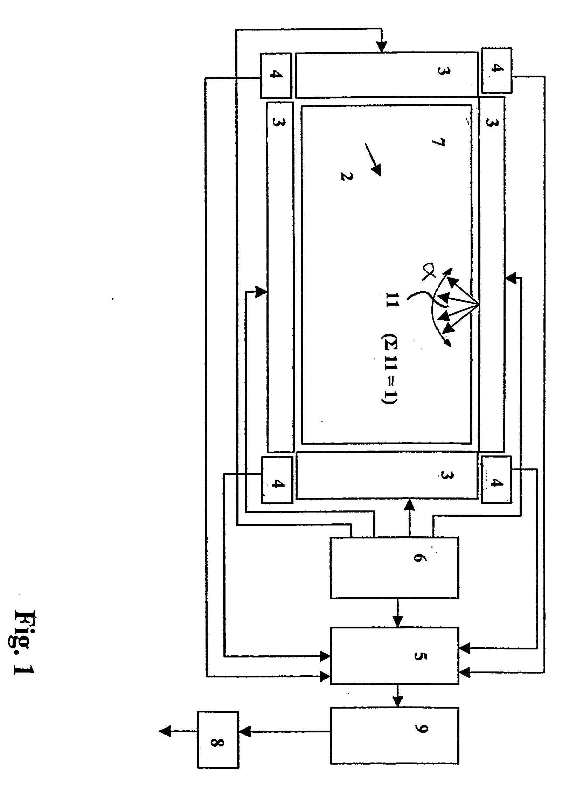

**Fig.1** zeigt die grundsätzlichen Komponenten der Anordnung zur Erkennung der Bedienposition 2 an der aus Lichtstrahlen 11 gebildeten Bedienebene 1 bestehend aus um die Bedienebene 1 rahmenförmig umlaufend angeordneten Leuchtelementen 3 mit großem Abstrahlwinkel α, so dass sie ein Streufeld bilden und deren Strahlung durch beabstandet angeordnete Detektoren 4, hier an jeder Ecke der rechteckigen Bedienebene, erfassbar und als Signal einer Auswerteeinheit 5 zuleitbar ist, wobei das bei der Weiterschaltung nacheinander erfolgende Aktivieren und Deaktivieren des jeweiligen Leuchtelementes 3 durch die Steuereinheit 6 erfolgt, die gleichzeitig mit der Auswerteeinheit 5 gekoppelt ist. Bestandteil der Auswerteeinheit 5 oder eine gesonderte Baugruppe ist der Positionsermittler 9, der über ein Interface 8 mit den jeweils die Eingabe realisierenden Baugruppen verbunden ist.
Alle oder einige Leuchtelemente 3 können dabei mehrere gleichzeitig zu aktivierende bzw. deaktivierende Lichtquellen aufweisen.

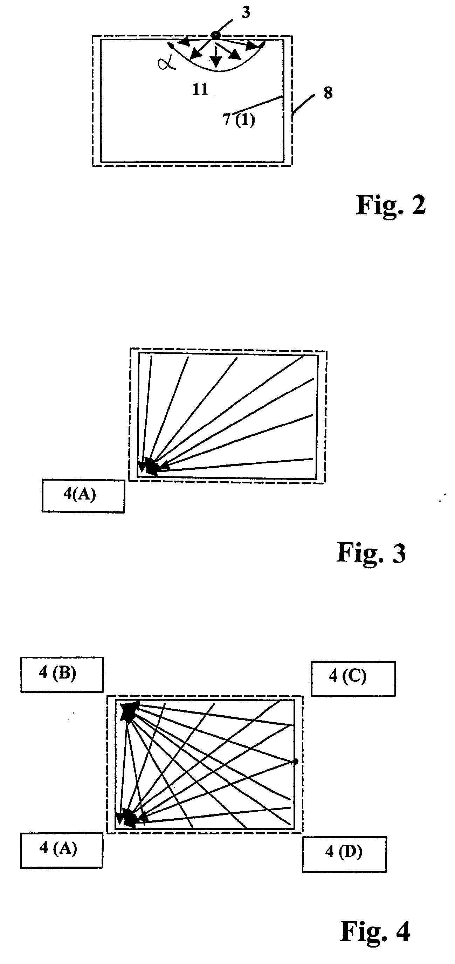

In den **Fig. 2 - 4** ist die Lichtausstrahlung und Detektierung näher dargestellt. In dem umlaufenden Rahmen 8 wird von der Steuereinheit 6 jeweils nur ein Leuchtelement 3 angesteuert, dass die Lichtstrahlen 11 mit großem Abstrahlwinkel α aussendet.
Dieses Leuchtelement 3 wird von der Steuereinheit 6 automatisch weitergeschaltet zur benachbarten Position, so dass die gesamte Bedienebene 1 nach einem Umlauf vollständig abgedeckt wurde von Lichtstrahlen 11.
Jeder der angeordneten Detektoren 4 überwacht die gegenüber liegenden Randbereiche, so dass dieser Detektor 4 eine zeitliche Abfolge von ankommenden Lichtstrahlen 11 erkennt. Hier dargestellt als Beispiel mit Detektor 4 (A) in **Fig. 3**.

Durch die Anordnung von einem Detektor 4 in jeder Ecke der Bedienebene 1 wird so die gesamte Bedienebene 1 optimal abgedeckt. **Fig. 4** zeigt als Beispiel einer rechteckigen Bedienebene 1 mit vier Detektoren 4 mit den Strahlenfächern zu zwei Detektoren 4 (A, B).

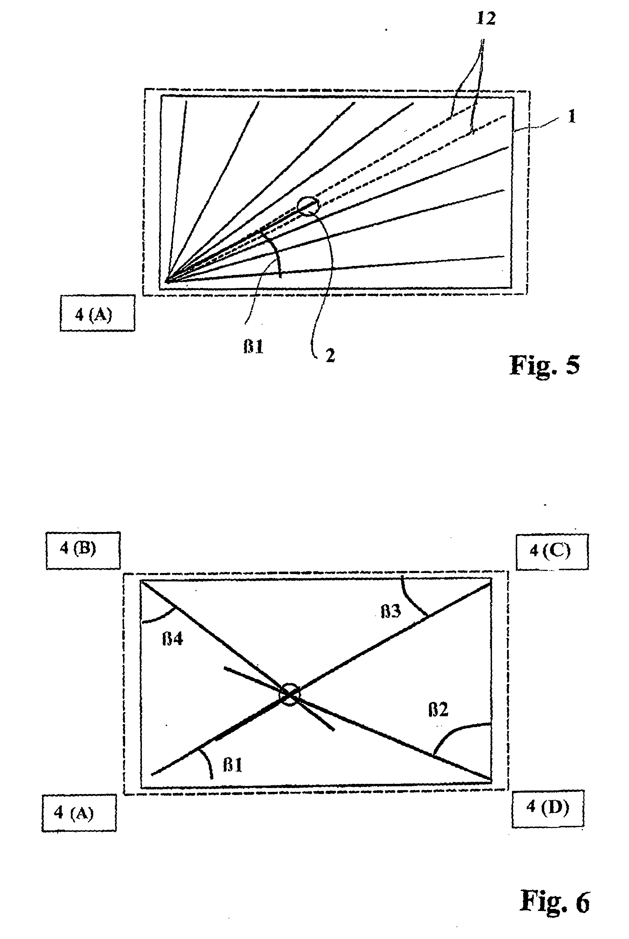

Im folgenden soll nun am Beispiel der **Fig. 5** und **6** die Ermittlung der Bedienposition 2 detailliert erläutert werden.
Wenn in der Bedienebene 1 eine Bedienposition 2 durch z.B. Drücken mit einem Finger betätigt wird, werden die entsprechenden Lichtstrahlen 12 (eine Untermenge von 11), die aus dem Winkel zu dem Detektor 4 (A) kommen, unterbrochen (gestrichelt dargestellt) und damit aus der Anzahl der erkannten Lichtstrahlen 11 minus 12 und unterbrochenen Lichtstrahlen 12 der Betätigungswinkel β1 der Bedienposition 2 aus der Sicht des Detektors 4 (A) ermittelt. Dabei ist es unerheblich, gegen welche "Kante" der Bedienebene 1 dieser Winkel ermittelt wird.

Jeder der Detektoren 4 erkennt die Bedienposition aus einen bestimmten Winkel β1 - β4. Durch die Auswertung aller erkannten Winkel β1 - β4 und mit den geometrischen Angaben der Seitenlängen der Bedienebene 1 kann die Lage der Bedienposition 2 errechnet werden.

Die Bedienposition 2 kann von der Anordnung in unterschiedlichster Weise an das zu bedienende System abgegeben werden z. B. über eine serielle Datenverbindung.

Die Verringerung der Auflösung bei der Nähe der Bedienposition 2 kurz vor einem Detektor 4 wird vollständig durch die gut auswertbaren Signale der anderen Detektoren 4 kompensiert.

Wenn durch eine zu große Nähe der Bedienposition 2 von einem Detektor 4 dessen Signale nicht gut ausgewertet werden können, decken die sehr gut auswertbaren Signale der anderen Detektoren 4 eine Positionsermittlung vollständig ab. Prinzipbedingt reichen sogar nur 2 erkannte Winkel für die Positionsermittlung aus, wodurch eine deutliche Zuverlässigkeitserhöhung erreicht wird.

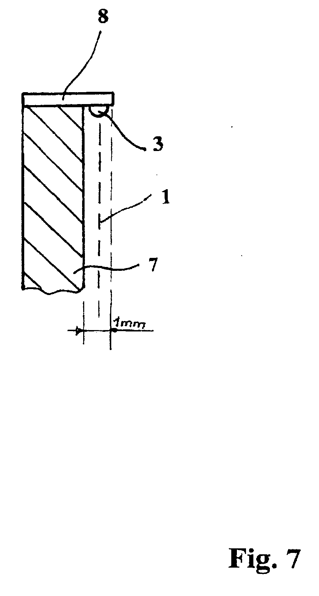

**Fig. 7** zeigt die Bedienebene 1 mit der Berührungsfläche 7 im Schnitt. Die Berührungsfläche 7 erfährt durch die davor angeordnete, aus Lichtstrahlen 11 gebildete Bedienebene 1 eine Dickenvergrößerung ≤ 1 mm. Bei der gewählten Darstellung sind die Leuchtelementen 3 rahmenförmig umlaufend untereinander beabstandet um die Bedienebene 1 und die Berührungsfläche 7 angeordnet. Irgendwo bedürfen die Leuchtelemente 3 ja einer Befestigung. Dies kann aber ebenso an einem gesonderten Rahmen 8 erfolgen.
Auf der Berührungsfläche 7 oder auch hinter dieser, wenn sie durchsichtig ist, können Berührungspiktogramme angeordnet sein.

### Bezugszeichenliste

- 1: Bedienebene
- 2: Bedienposition
- 3: Leuchtelemente
- 4: Detektoren
- 5: Auswerteeinheit
- 6: Steuereinheit
- 7: Berührungsfläche
- 8: Rahmen
- 9: Positionsermittler
- 10: Interface
- 11: Lichtstrahlen als Streufeld
- 12: unterbrochene Lichtstrahlen des Streufeldes

## Patentansprüche

1. Verfahren zur Erkennung einer Bedienposition an einer aus Lichtstrahlen gebildeten Bedienebene mit um die Bedienebene rahmenförmig umlaufend untereinander beabstandet angeordneten Leuchtelementen, deren Strahlung durch Detektoren, deren Anzahl deutlich unter der Zahl der Leuchtelemente liegt, erfasst und einer Auswertung zugeleitet werden, **dadurch gekennzeichnet dass**
die Leuchtelemente von einer Steuereinheit zyklisch umlaufend weitergeschaltet und dabei jeweils aktiviert und deaktiviert werden, das abgestrahlte Licht der Leuchtelemente jeweils mit einem großen Abstrahlwinkel α, ein Streufeld bildend, ausgesendet wird, so das die Bedienebene nach einem umgelaufenen Weiterschaltzyklus vollständig von leuchtenden Strahlen abgedeckt war, jeder Detektor den oder die ihm gegenüberliegenden Randbereich(e) auf Abstrahlung von den nacheinander aktivierten Leuchtelementen überwacht und die Nichterfassung der Abstrahlung als Fehlmeldung einer Recheneinheit zugeführt wird, wobei mindestens die Fehlmeldung von zwei Detektoren zur Positionsbestimmung genutzt wird.

2. Verfahren nach Anspruch 1, **dadurch gekennzeichnet**, das
der Abstrahlwinkel α mindestens so groß gewählt ist, dass das abgestrahlte Licht direkt durch mindestens zwei beabstandet angeordnete Detektoren erfassbar ist.

3. Verfahren nach Anspruch 1 oder 2, **dadurch gekennzeichnet**, das
der Abstrahlwinkel größer 90° ist, vorzugsweise bis 180° oder 360°.

4. Verfahren nach einem der Ansprüche 1 bis 3, **dadurch gekennzeichnet, dass**
jeweils das benachbart im Zyklus folgende Leuchtelement bei der Weiterschaltung aktiviert und dann deaktiviert wird.

5. Verfahren nach einem der Ansprüche 1 bis 4, **dadurch gekennzeichnet, dass**
alle oder einzelne Leuchtelemente aus einzelnen oder mehreren im Bündel zu aktivierenden Leuchtquellen bestehen.

6. Verfahren nach einem der Ansprüche 1 bis 5, **dadurch gekennzeichnet, dass**
zwischen dem Deaktivieren des einen Leuchtelementes und dem Aktivieren des folgenden Leuchtelementes eine Pause besteht, in der durch die Detektoren die Umweltlichtverhältnisse des zur Aktivierung anstehenden Leuchtelementes erfasst und einer Auswertung zugeleitet werden.

7. Verfahren nach einem der Ansprüche 1 bis 6, **dadurch gekennzeichnet, dass**
innerhalb einer Zeiteinheit eine bestimmte Anzahl von Umlaufzyklen realisiert wird.

8. Verfahren nach Anspruch 7, **dadurch gekennzeichnet, dass**
innerhalb einer Sekunde mehrere Umlaufzyklen realisiert werden, vorzugsweise 4.

9. Anordnung zur Erkennung der Bedienposition (2) an einer aus Lichtstrahlen (11) gebildeten Bedienebene (1) bestehend aus um die Bedienebene (1) rahmenförmig umlaufend angeordneten Leuchtelementen (3) mit großem Abstrahlwinkel α, und so ein Streufeld bildend, deren Strahlung durch beabstandet angeordnete Detektoren (4), deren Zahl deutlich unter der Zahl der Leuchtelemente (3) liegt, erfassbar und als Signal einer Auswerteeinheit (5) zuleitbar ist, wobei das bei der Weiterschaltung nacheinander erfolgende Aktivieren und Deaktivieren des jeweiligen Leuchtelementes (3) durch eine Steuereinheit (6) erfolgt, die gleichzeitig mit der Auswerteeinheit (5) gekoppelt ist.

10. Anordnung nach Anspruch 9, **dadurch gekennzeichnet, dass**
alle oder einige Leuchtelemente (3) mehrere gleichzeitig zu aktivierende bzw. deaktivierende Lichtquellen aufweisen.

11. Anordnung nach Anspruch 9 oder 10, **dadurch gekennzeichnet, dass**
bei einer rechteckigen oder quadratischen Bedienebene (1) die Detektoren (4) bevorzugt in den jeweiligen Ecken, vorzugsweise ein Detektor (4) je Ecke, angeordnet sind.

12. Anordnung nach einem der Ansprüche 9 bis 11, **dadurch gekennzeichnet, dass**
der Bedienebene (1) eine Berührungsfläche (7) nachgeordnet ist.

13. Anordnung nach Anspruch 12, **dadurch gekennzeichnet, dass**
die Berührungsfläche (7) durch die davor angeordnete Bedienebene (1) eine Dickenvergrößerung ≤ 1 mm erfährt.

14. Anordnung nach Anspruch 12 oder 13, **dadurch gekennzeichnet, dass**
auf der Berührungsfläche (7) Berührungspiktogramme angeordnet sind.

15. Anordnung nach Anspruch 13 oder 14, **dadurch gekennzeichnet, dass**
der Rahmen (8) außen um die Berührungsfläche (7) angeordnet ist, um die nutzbare Fläche nicht zu verringern.

16. Verwendung der Anordnung zur Erkennung der Bedienposition ohne Berührungsfläche zur Sicherung des Zugriffs auf Schalter für Maschinen oder andere einer Kontrolle unterliegenden Betätigungsmittel.

17. Verwendung der Anordnung zur Erkennung der Bedienposition mit Berührungsfläche zur Steuerung medizinischer und anderer Geräte, an die höchste Anforderungen in Bezug auf Sauberkeit und Sterilität sowie den Schutz vor anderen Umwelteinflüssen gestellt sind.
